# EUROPEAN PATENT SPECIFICATION

(11) **EP 2 479 641 B1**
(45) Date of publication and mention of the grant of the patent: **01.03.2017**
(21) Application number: 11151383.4
(22) Date of filing: 19.01.2011
(51) Int. Cl.: G06F 1/32, G06F 3/033, H01H 35/02

(54) **Mouse**
Maus
Souris

(43) Date of publication of application: 25.07.2012
(73) Proprietor: Giga-Byte Technology Co., Ltd., New Taipei City 231 (TW)
(72) Inventor: Chen, Shu-I, Taipei County (TW); Shih, Po-Jen, Taipei County (TW)
(74) Representative: Cabinet Plasseraud

(56) References cited:
- WO-A1-00/25196
- US-A- 6 104 009
- US-A1- 2002 166 756
- US-B1- 6 492 975

## Description

### BACKGROUND OF THE INVENTION

### Field of the Invention

The present invention relates to a mouse, and in particular relates to a wireless mouse which has decreased power consumption.

### Description of the Related Art

A conventional wireless mouse is automatically deactivated only when the key of the wireless mouse has not been pressed for a long period of time. Thus, a relatively large amount of power is consumed during the long period of time, shortening the time for battery power usage of the wireless mouse. Therefore, a wireless mouse with decreased power consumption is required. For example, WO 2000/25196 A1 discloses a wireless mouse including a power source that is activated by a manual switch or mercury switch that is activated when the mouse is oriented for use, as opposed to being stored on a rack. Besides, US 6,104,009 A discloses a circuitry for automatically disconnecting the power to the electric device (clothes iron) when it is left unattended for a certain period of time.

### BRIEF SUMMARY OF THE INVENTION

A mouse adapted to stand or lie on a supporting surface is provided, as set out in the independent claim. The mouse includes a housing, a power source and a power switch unit. The power source is disposed in the housing. The power switch unit is disposed in the housing, the power switch unit includes a pivot shaft, a weight element and a switch circuit board. The weight element pivots on the pivot shaft, wherein the weight element pivots between a first orientation and a second orientation, and when the mouse is placed standing on the supporting surface, the weight element is in the first orientation, and when the mouse lies on the supporting surface, the weight element is in the second orientation. The switch circuit board is electrically connected to the power source, wherein the switch circuit board comprises a first contact and a second contact, and when the weight element is in the second orientation, the weight element electrically connects the first contact to the second contact to turn on the mouse, and when the weight element is in the first orientation, the weight element is separated from the first contact and the second contact.

When utilizing the mouse of the embodiments of the invention, the power switch unit turns off the mouse automatically when the mouse is placed standing on a supporting surface. Accordingly, power consumption of the power source (battery unit) of the mouse is saved, and battery power usage of the mouse is extended.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:
Fig. 1A shows a mouse of a first example of the invention standing on a supporting surface (table);
Fig. 1B shows the mouse of the first example of the invention lying on the supporting surface (table);
Fig. 2A is a sectional view of the mouse in Fig. 1A;
Fig. 2B is a sectional view of the mouse in Fig. 1B;
Fig. 3 shows a detailed structure of a switch circuit board of the first example of the invention;
Fig. 4 is a block diagram of the mouse of the first example of the invention;
Figs. 5A and 5B show a mouse of a second example of the invention;
Figs. 6A and 6B show a mouse of a first embodiment of the invention; and
Fig. 7 shows a mouse of a second embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

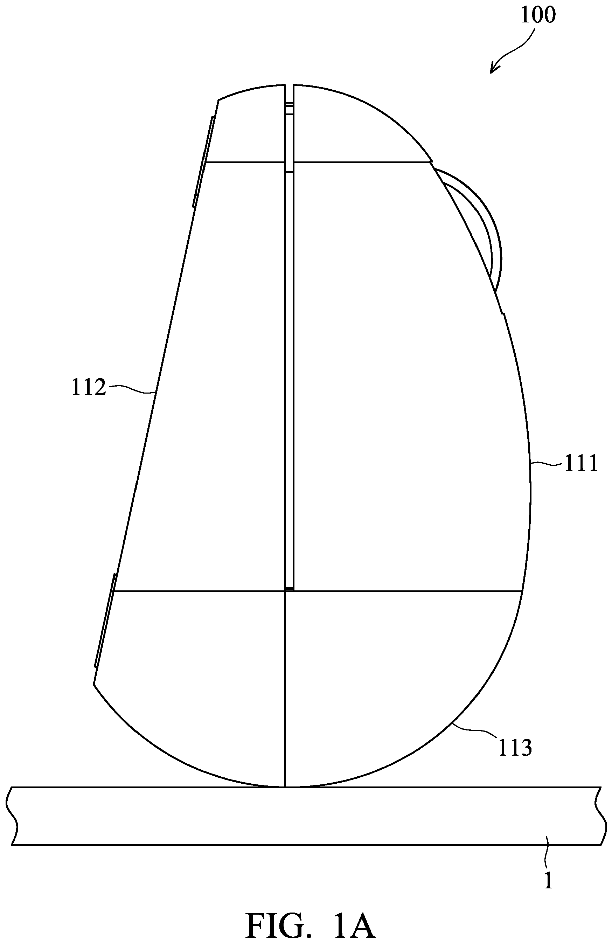

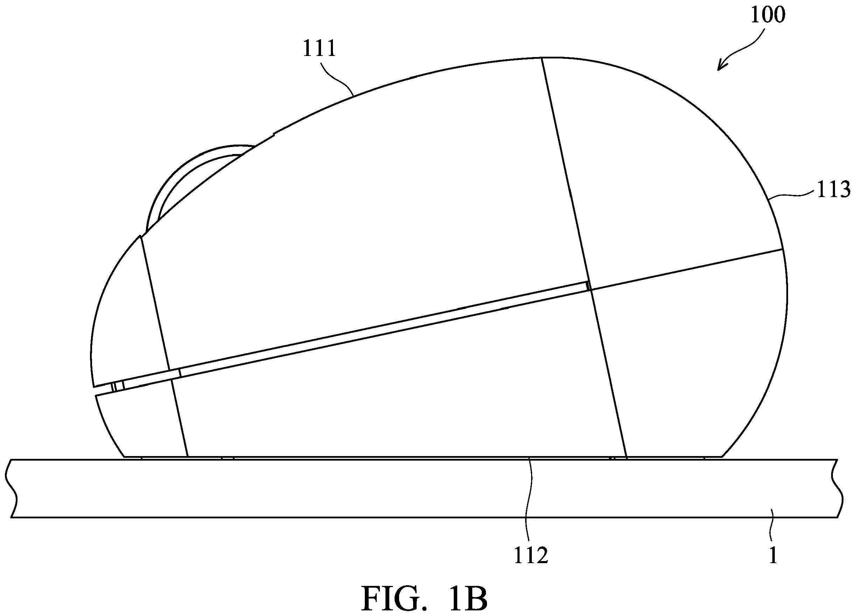

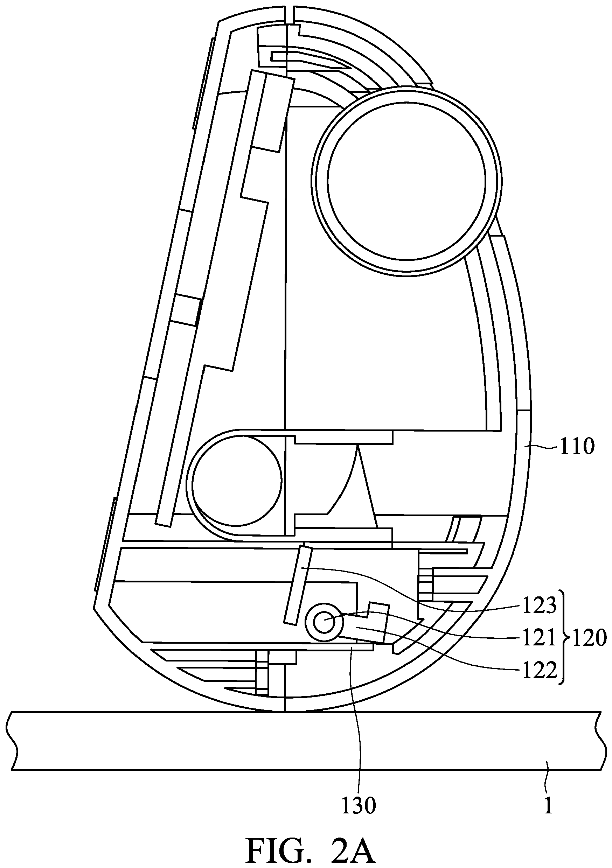

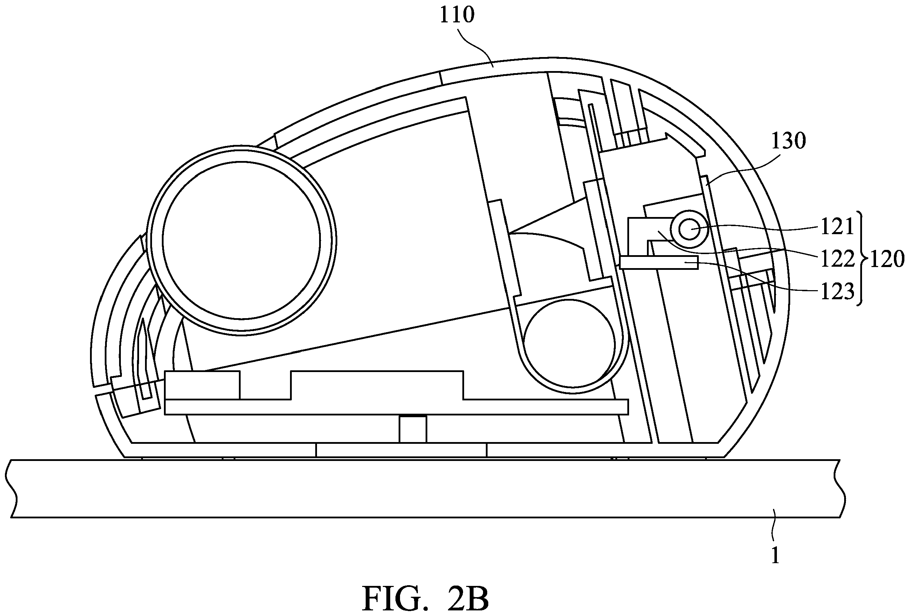

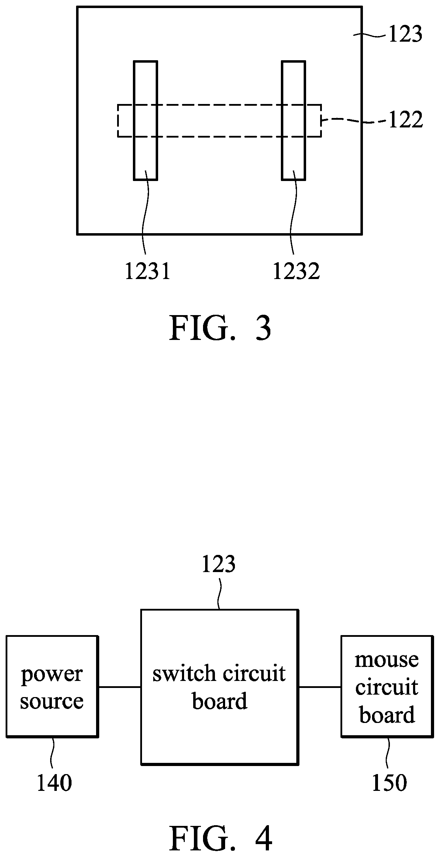

Figs. 1A and 1B show a mouse 100 of a first example of the invention. Fig. 1A shows the mouse 100 of the first example standing on a supporting surface (table). Fig. 1B shows the mouse 100 of the first example lying on the supporting surface (table). Fig. 2A is a sectional view of the mouse 100 in Fig. 1A. Fig. 2B is a sectional view of the mouse 100 in Fig. 1B. With reference to Figs. 2A and 2B, the mouse 100 comprises a housing 110, a power source (not shown) and a power switch unit 120. The power source is disposed in the housing 110. The power switch unit 120 is disposed in the housing 110. The power switch unit 120 comprises a pivot shaft 121, a weight element 122 and switch circuit board 123. The weight element 122 pivots on the pivot shaft 121, wherein the weight element 122 pivots between a first orientation (as shown in Fig. 2A) and a second orientation (as shown in Fig. 2B). When the mouse 100 stands on the supporting surface, the weight element 122 is in the first orientation, and when the mouse 100 lies on the supporting surface, the weight element 122 pivots to the second orientation. The switch circuit board 123 is electrically connected to the power source. With reference to Fig. 3, the switch circuit board 123 comprises a first contact 1231 and a second contact 1232. When the weight element 122 is in the second orientation, the weight element 122 electrically connects the first contact 1231 to the second contact 1232 to turn on the mouse 100. In Fig. 3, the weight element 122 is shown as a dotted line. With reference to Figs. 2A, 2B and 3, the weight element 122 is L shaped, an end of the weight element 122 pivots on the pivot shaft 121, and when the weight element 122 is in the second orientation, the other end of the weight element 122 contacts the first contact 1231 and the second contact 1232.

With reference to Figs. 2A and 2B, the mouse 100 further comprises a barricade 130, wherein when the weight element 122 is in the first orientation, the weight element 122 abuts the barricade 130.

With reference to Fig. 4, the poured source 140 is electrically connected to the switch circuit board 123 of the power switch unit 120. The switch circuit board 123 is electrically connected to a mouse circuit board 150. When the mouse is turned on, the electric power provided by the power source 140 passes through the switch circuit board 123 to the mouse circuit board 150.

With reference to Figs. 1A and 1B, the housing 110 further comprises a holding portion 111, a sliding portion 112 and a standing portion 113, wherein the standing portion 113 is connected to the holding portion 111 and the sliding portion 112, and the standing portion 113 is curved. In this embodiment, the center-of-gravity of the mouse 100 can be designed adjacent to the standing portion 113 to keep the mouse 100 standing similar to tumbler (toy). For example, the battery unit (power source) of the mouse 100 can be disposed in the housing 100 adjacent to the standing portion 113, or an additional weight can be disposed adjacent to the standing portion 113.

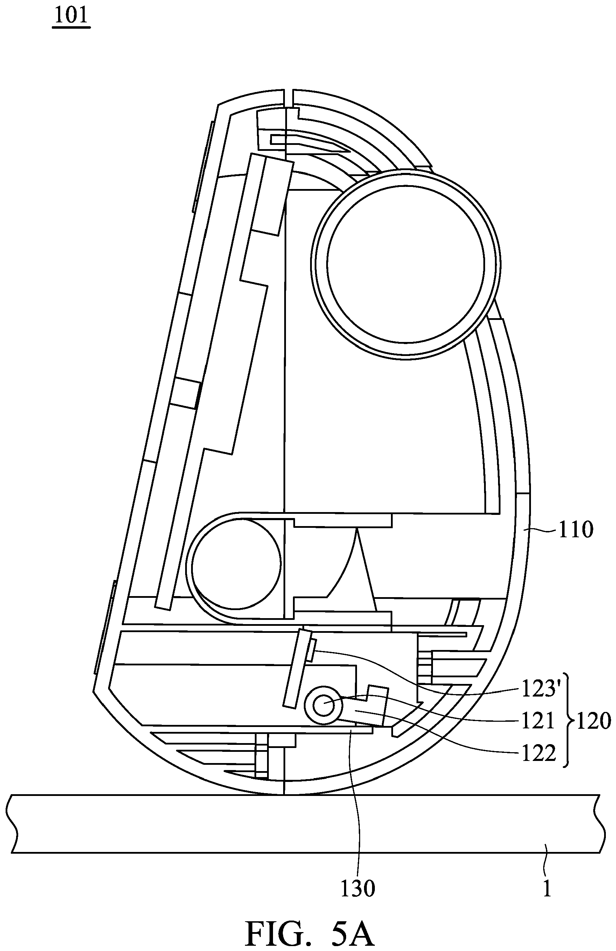

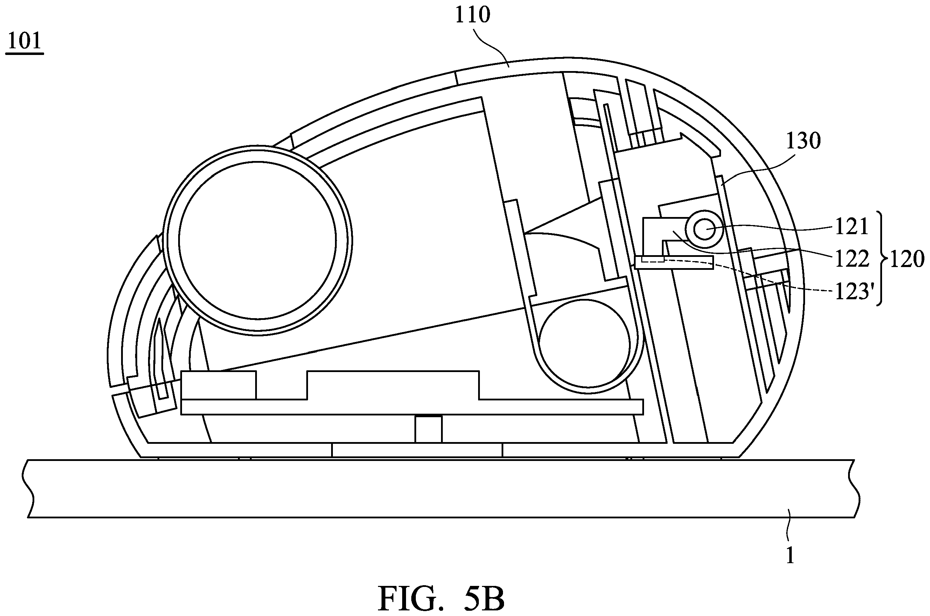

Figs. 5A and 5B show a mouse 101 of a second example of the invention,
wherein the switch circuit board 123 is replaced by a switch element 123'. When the weight element 122 is in the second orientation, the weight element 122 presses the switch element 123' to turn on the mouse. The switch element 123' can be a contact switch or other switches.

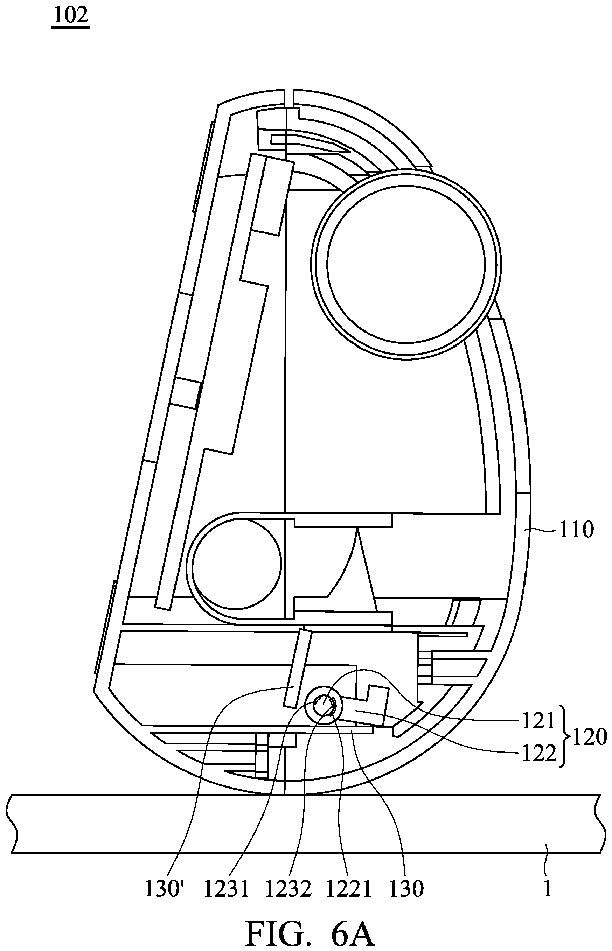

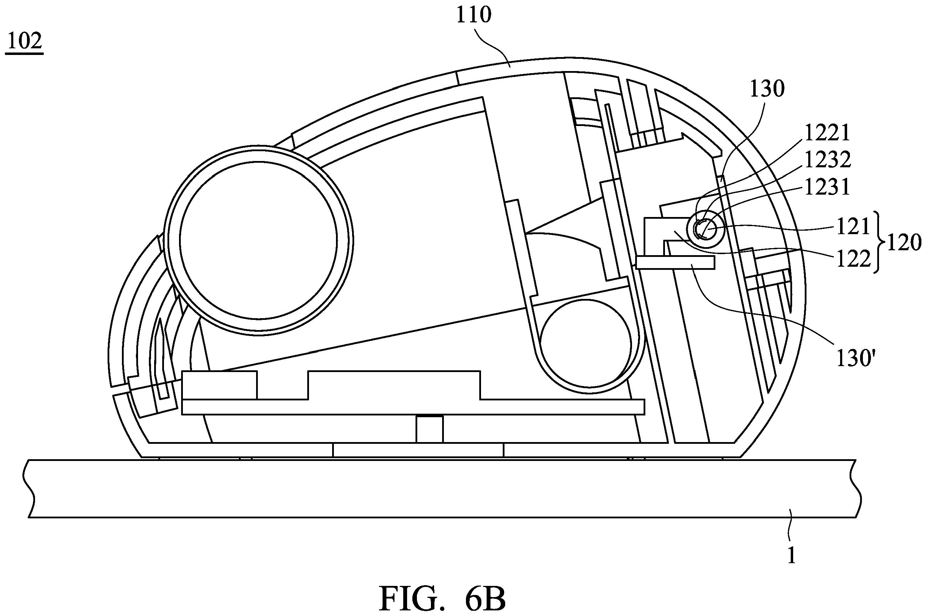

Figs. 6A and 6B show a mouse 103 of a first embodiment of the invention,
wherein the switch circuit board 123 is omitted. A first contact 1231 and a second contact 1232 are disposed on the pivot shaft 121. The weight element 122 comprises a conductive pad 1221. When the weight element 122 is in the second orientation, the conductive pad 1221 electrically connects the first contact 1231 to the second contact 1232 to turn on the mouse. Additionally, the mouse 102 of the first embodiment can
further comprise a barricade 130' to restrict the rotation orientation of the weight element 122.

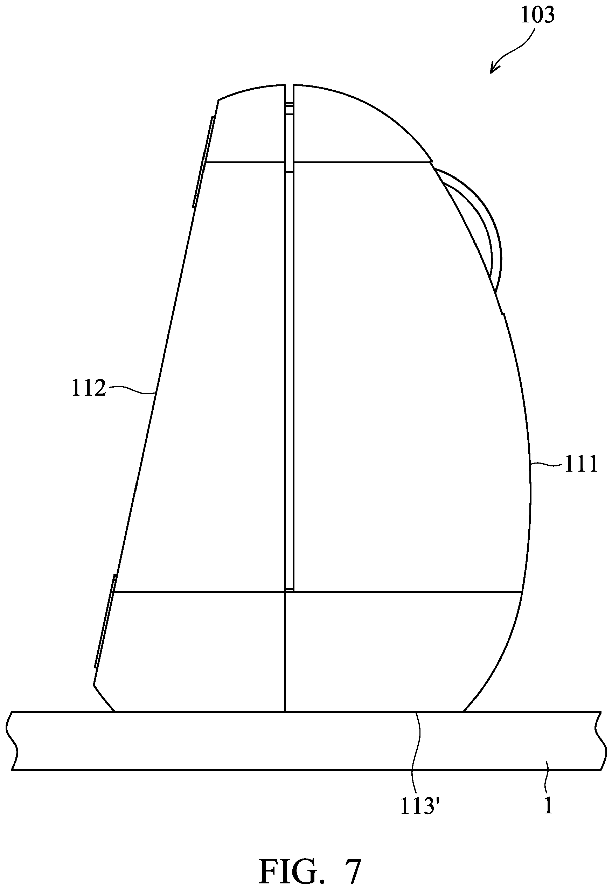

Fig. 7 shows a mouse 103 of a second embodiment of the invention, wherein
the standing portion 113' is planar, allowing the mouse 103 to stand therewith. The embodiment of Fig. 7 can be incorporated with any embodiment previously mentioned in this description.

When utilizing the mouse of the embodiments of the invention, the power switch unit turns off the mouse automatically when the mouse is placed standing on the supporting surface. Accordingly, power consumption of the power source (battery unit) of the mouse is saved, and battery power usage of the mouse is extended.

The use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A mouse (102) adapted to stand or lie on a supporting surface (1), **characterized by** comprising:
a housing (110);
a power source (140), disposed in the housing (110); and
a power switch unit (120), disposed in the housing (110), comprising:
a pivot shaft (121);
a weight element (122), being adapted to pivoting on the pivot shaft (121), wherein the weight element (122) pivots between a first orientation and a second orientation, and when the mouse (102) is placed standing on the supporting surface (1), the weight element (122) is in the first orientation, and when the mouse (102) lies on the supporting surface (1), the weight element (122) is in the second orientation;
a first contact (1231), disposed on the pivot shaft (121); and
a second contact (1232), disposed on the pivot shaft (121), wherein when the weight element (122) is in the second orientation, the weight element (122) electrically connects the first contact (1231) to the second contact (1232) to turn on the mouse (102).

2. The mouse as claimed in claim 1, wherein the weight element (122) is L shaped, an end of the weight element (122) pivots on the pivot shaft (121), and the weight element (122) comprises a conductive pad (1221), and when the weight element (122) is in the second orientation, the conductive pad (1221) electrically contacts the first contact (1231) to the second contact (1232).

3. The mouse as claimed in claim 1, further comprising a barricade (130'), wherein when the weight element (122) is in the first orientation, the weight element (122) abuts the barricade (130').

4. The mouse as claimed in claim 1, wherein the housing (110) further comprises a holding portion (111), a sliding portion (112) and a standing portion (113), and the standing portion (113) is connected to the holding portion (111) and the sliding portion (112), and the standing portion (113) is curved.

5. The mouse as claimed in claim 4, further comprising a battery unit, wherein the battery unit is disposed in the housing (110) and is adjacent to the standing portion (113).

6. The mouse as claimed in claim 1, wherein the housing (110) further comprises a holding portion (111), a sliding portion (112) and a standing portion (113'), and the standing portion (113') is connected to the holding portion (111) and the sliding portion (112), and the standing portion (113') is planar.

## Patentansprüche

1. Maus (102), die geeignet ist, auf einer Auflagefläche (1) zu stehen oder zu liegen, **dadurch gekennzeichnet, dass** sie aufweist:
ein Gehäuse (110);
eine Leistungsquelle (140), die in dem Gehäuse (110) angeordnet ist; und
eine Leistungsschalteinheit (120), die in dem Gehäuse (110) angeordnet ist, die aufweist:
eine Schwenkachse (121);
ein Gewichtselement (122), das geeignet ist, auf der Schwenkachse (121) zu schwenken, wobei das Gewichtselement (122) zwischen einer ersten Ausrichtung und einer zweiten Ausrichtung schwenkt, und wobei das Gewichtselement (122) in der ersten Ausrichtung ist, wenn die Maus auf der Auflagefläche (1) stehend angeordnet ist, und das Gewichtselement (122) in der zweiten Ausrichtung ist, wenn die Maus (102) auf der Auflagefläche (1) liegt;
einen ersten Kontakt (1231), der auf der Schwenkwelle (121) angeordnet ist; und
einen zweiten Kontakt (1232), der auf der Schwenkwelle (121) angeordnet ist, wobei das Gewichtselement (122) den ersten Kontakt (1231) mit dem zweiten Kontakt (1232) elektrisch verbindet, wenn das Gewichtselement (122) in der zweiten Ausrichtung ist, um die Maus (102) einzuschalten.

2. Maus nach Anspruch 1, wobei das Gewichtselement (122) L-förmig ist, ein Ende des Gewichtselements (122) auf der Schwenkachse (121) schwenkt und das Gewichtselement (122) ein leitendes Auflager (1221) aufweist, und wobei das leitende Auflager (1221) den ersten Kontakt (1231) mit dem zweiten Kontakt (1232) elektrisch verbindet, wenn das Gewichtselement (122) in der zweiten Ausrichtung ist.

3. Maus nach Anspruch 1, die ferner eine Sperre (130') aufweist, wobei das Gewichtselement (122) an der Sperre (130') anliegt, wenn das Gewichtselement (122) in der ersten Ausrichtung ist.

4. Maus nach Anspruch 1, wobei das Gehäuse (110) ferner einen Halteabschnitt (111), einen Gleitabschnitt (112) und einen stehenden Abschnitt (113) aufweist, und der stehende Abschnitt (113) mit dem Halteabschnitt (111) und dem Gleitabschnitt (112) verbunden ist und der stehende Abschnitt (113) gekrümmt ist.

5. Maus nach Anspruch 4, die ferner eine Batterieeinheit aufweist, wobei die Batterieeinheit in dem Gehäuse (110) angeordnet ist und zu dem stehenden Abschnitt (113) benachbart ist.

6. Maus nach Anspruch 1, wobei das Gehäuse (110) ferner einen Halteabschnitt (111), einen Gleitabschnitt (112) und einen stehenden Abschnitt (113') aufweist, und der stehende Abschnitt (113') mit dem Halteabschnitt (111) und dem Gleitabschnitt (112) verbunden ist und der stehende Abschnitt (113') eben ist.

## Revendications

1. Souris (102) adaptée pour se tenir debout ou couchée sur une surface porteuse (1), **caractérisée en ce qu'**elle comprend :
un boîtier (110) ;
une source d'énergie (140), disposée dans le boîtier (110) ; et
une unité de commutation d'énergie (120), disposée dans le boîtier (110), comprenant :
un axe pivotant (121) ;
un élément de poids (122), étant adapté pour pivoter sur l'axe pivotant (121), dans laquelle l'élément de poids (122) pivote entre une première orientation et une seconde orientation, et lorsque la souris (102) est placée debout sur la surface porteuse (1), l'élément de poids (122) est dans la première orientation, et lorsque la souris (102) est couchée sur la surface porteuse (1), l'élément de poids (122) est dans la seconde orientation ;
un premier contact (1231), disposé sur l'axe pivotant (121) ; et
un second contact (1232), disposé sur l'axe pivotant (121), dans laquelle, lorsque l'élément de poids (122) est dans la seconde orientation, l'élément de poids (122) connecte électriquement le premier contact (1231) au second contact (1232) pour mettre sous tension la souris (102).

2. Souris selon la revendication 1, dans laquelle l'élément de poids (122) a une forme de L, une extrémité de l'élément de poids (122) pivote sur l'axe pivotant (121), et l'élément de poids (122) comprend une pastille conductrice (1221), et lorsque l'élément de poids (122) est dans la seconde orientation, la pastille conductrice (1221) contacte électriquement le premier contact (1231) au second contact (1232).

3. Souris selon la revendication 1, comprenant en outre une barrière (130'), dans laquelle, lorsque l'élément de poids (122) est dans la première orientation, l'élément de poids (122) bute contre la barrière (130').

4. Souris selon la revendication 1, dans laquelle le boîtier (110) comprend en outre une partie destinée à être tenue (111), une partie destinée à glisser (112) et une partie destinée à tenir debout (113), et la partie destinée à tenir debout (113) est reliée à la partie destinée à être tenue (111) et à la partie destinée à glisser (112), et la partie destinée à tenir debout (113) est incurvée.

5. Souris selon la revendication 4, comprenant en outre une unité de batterie, dans laquelle l'unité de batterie est disposée dans le boîtier (110) et est adjacente à la partie destinée à tenir debout (113).

6. Souris selon la revendication 1, dans laquelle le boîtier (110) comprend en outre une partie destinée à être tenue (111), une partie destinée à glisser (112) et une partie destinée à tenir debout (113'), et la partie destinée à tenir debout (113') est reliée à la partie destinée à être tenue (111) et à la partie destinée à glisser (112), et la partie destinée à tenir debout (113') est plane.
